# EUROPÄISCHE PATENTSCHRIFT

(11) **EP 1 306 537 B1**
(45) Veröffentlichungstag und Bekanntmachung des Hinweises auf die Patenterteilung: **26.01.2011**
(21) Anmeldenummer: 02020934.2
(22) Anmeldetag: 19.09.2002
(51) Int. Cl.: F02D 41/00, F02D 19/00

(54) **Verfahren und Vorrichtung zur Steuerung einer Brennkraftmaschine**
Method and apparatus for controlling an internal combustion engine
Méthode et dispositif de commande d'un moteur à combustion interne

(30) Priorität: 23.10.2001 DE 10152084
(43) Veröffentlichungstag der Anmeldung: 02.05.2003
(73) Patentinhaber: ROBERT BOSCH GMBH, 70442 Stuttgart (DE)
(72) Erfinder: Schedler, Thilo, 71679 Asperg (DE); Grieshaber, Hermann, 72631 Aichtal (DE); Becker, Thomas, 73728 Esslingen (DE); Bleile, Thomas, 70435 Stuttgart (DE); Veit, Guenter, 73207 Plochingen (DE); Kraus, Benedikt, 70806 Kornwestheim (DE); Harndorf, Horst, 71701 Schwieberdingen (DE); Kamp, Bernhard, 70563 Stuttgart (DE); Granda, Miguel, 28022 Madrid (ES)

(56) Entgegenhaltungen:
- EP-A- 0 423 636
- DE-A1- 4 019 161
- DE-A1- 4 407 077
- DE-A1- 10 042 490
- GB-A- 2 273 374
- US-A- 4 438 749
- US-A- 5 140 965
- US-A- 5 179 926

## Beschreibung

### Stand der Technik

Die Erfindung betrifft ein Verfahren und eine Vorrichtung zur Steuerung einer Brennkraftmaschine gemäß den Oberbegriffen der unabhängigen Ansprüche.

Es sind Verfahren und Vorrichtungen zur Steuerung von Brennkraftmaschinen bekannt (z.B aus GB 2,273,374), bei denen ausgehend von wenigstens einer ersten Größe, eine erste Steuergröße vorgebbar sind. Des Weiteren ist bekannt, dass abhängig von einer zweiten Größe, ausgehend von der ersten und/oder der zweiten Steuergröße, eine Ausgangsgröße vorgebbar ist. So ist es beispielsweise bekannt, dass abhängig vom Betriebszustand der Brennkraftmaschine, der beispielsweise durch Temperatur und andere Umgebungsbedingungen definiert sein kann, zwischen unterschiedlichen Kennfeldern für bestimmte Steuergrößen umgeschaltet wird.

Neben herkömmlichem Dieselkraftstoff werden alternative Kraftstoffe, wie beispielsweise Fettsäure-Methylester oder Rapsöl-Methylester, verwendet, die im Folgenden auch Biodiesel genannt werden. Diese alternativen Kraftstoffe unterscheiden sich bezüglich ihrer chemischen und physikalischen Eigenschaften von herkömmlichen Kraftstoffen. Dies führt unter anderem dazu, dass bestimmte Emissionen ansteigen und andere Emissionen abnehmen. Des Weiteren besitzen diese alternativen Kraftstoffe unterschiedliche Energiegehalte wie herkömmliche Kraftstoffe. Weiterhin wird durch diese Kraftstoffe das Anspringverhalten im Kaltstart verändert.

Es ist ferner bekannt, dass Benzinbrennkraftmaschinen mit einem Benzinalkoholgemisch bzw. nur mit Benzin betrieben werden. Wird ein Alkoholanteil im Kraftstoff erkannt, so werden die entsprechenden Größen korrigiert. So wird beispielsweise die Einspritzdauer verlängert.

### Vorteile der Erfindung

Dadurch, dass bei einem Verfahren oder einer Vorrichtung zur Steuerung einer Brennkraftmaschine, bei dem ausgehend von einer zweiten Größe, die die Konzentration von Biodiesel charakterisiert zwischen unterschiedlichen Vorgaben einer Steuergröße umgeschaltet wird bzw. bei dem abhängig von der zweiten Größe ein Korrekturwert zur Korrektur der Steuergröße vorgebbar ist, ist eine wesentlich verbesserte Steuerung und/oder Betrieb der Brennkraftmaschine mit Biodiesel möglich.

Besonders vorteilhaft ist es, wenn die zweite Größe mittels eines Sensors erfasst wird. Alternativ kann auch vorgesehen sein, dass die Größe ausgehend von anderen Messwerten berechnet und/oder simuliert wird.

Vorzugsweise ist vorgesehen, dass die erste Steuergröße der Ausgangsgröße bei Verwendung von herkömmlichen Diesel entspricht und dass die zweite Steuergröße der Ausgangsgröße bei Verwendung von Biodiesel entspricht. Diese bedeutet es sind verschiedene Kennfelder doppelt vorhanden. In einem Kennfeld ist die entsprechende Größe für herkömmlichen Diesel und in dem anderen Kennfeld für Biodiesel abgelegt.

Besonders vorteilhaft ist es, wenn die erfindungsgemäße Vorgehensweise bei der Steuerung und/oder Regelung der Einspritzung von Kraftstoff, Rückführung von Abgas, des Kraftstoffdrucks, der Filterheizung und/oder einen des Glühvorgangs verwendet wird, da bei diesen Größen wesentliche Unterschiede bei der Verwendung von Biodiesel gegenüber herkömmlichen Kraftstoffen auftreten.

### Zeichnung

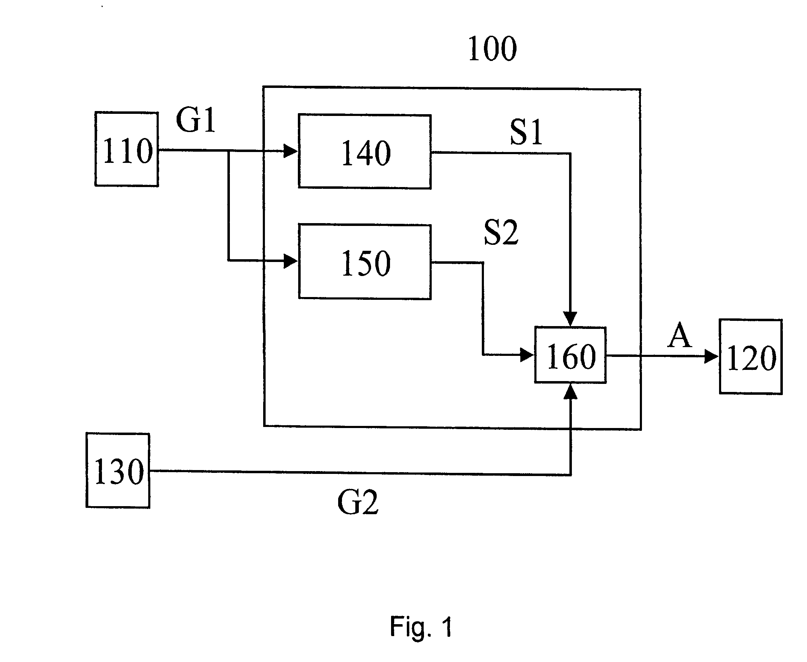

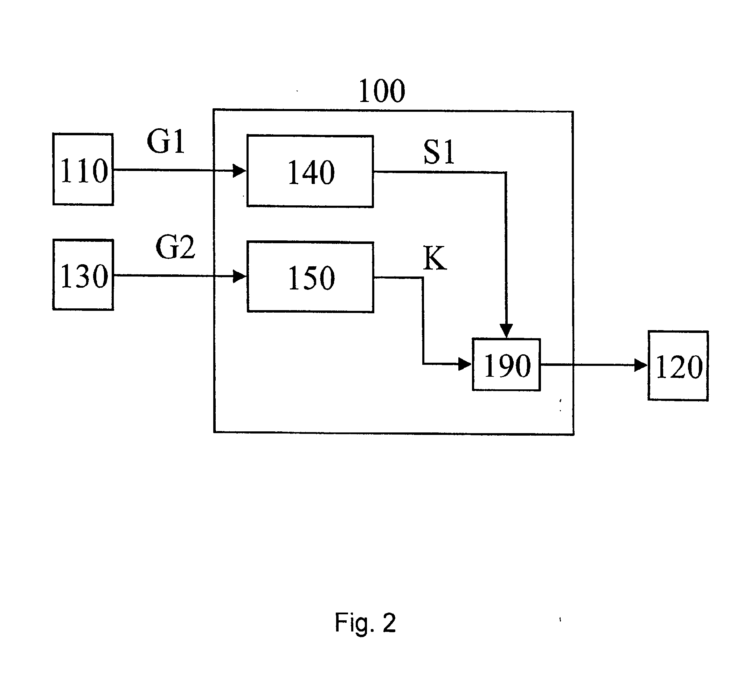

Die Erfindung wird nachstehend anhand der in einer Zeichnung dargestellten Ausführungsformen erläutert. Die Figuren 1 und 2 zeigen jeweils eine Ausführungsform der erfindungsgemäßen Vorgehensweise.

### Beschreibung der Ausführungsbeispiele

Eine Steuereinheit 100 erhält von einer ersten Funktionseinheit 110 eine erste Größe G1 zugeführt und beaufschlagt eine zweite Funktionseinheit 120 mit einer Ausgangsgröße A. Des Weiteren verarbeitet die erste Steuereinheit 100 eine zweite Größe G2 von einem Sensor 130 und/oder einer weiteren Funktionseinheit.

Die erste Größe G1, die von der ersten Funktionseinheit 110 bereitgestellt wird, gelangt zum einen zu einem ersten Kennfeld 140 und zum anderen zu einem zweiten Kennfeld 150. Das Ausgangssignal des ersten Kennfeldes 140 wird auch als erste Steuergröße S1 und das Ausgangssignal des zweiten Kennfeldes 150 als zweite Steuergröße S2 bezeichnet. Diese werden beide einem Umschaltmittel 160 zugeleitet, das wiederum abhängig von der zweiten Größe G2 die Ausgangsgröße A der zweiten Funktionseinheit 120 bereitstellt.

Bei der ersten Funktionseinheit handelt es sich, abhängig von der Ausführungsform, um einen Sensor oder um mehrere Sensoren, die Betriebskenngrößen und/oder Umgebungsbedingungen erfassen. Alternativ kann es sich bei der ersten Funktionseinheit auch um eine Steuereinheit, die eine Steuergröße bereitstellt, handeln. Bei der zweiten Funktionseinheit handelt es sich bevorzugt um ein Stellelement, das eine Größe der Brennkraftmaschine, wie beispielsweise die eingespritzte Kraftstoffmenge, beeinflusst. Bei der Ausgangsgröße handelt es sich in diesem Fall um die Stellgröße für das Stellelement. Alternativ kann auch vorgesehen sein, dass es sich bei der zweiten Funktionseinheit ebenfalls um eine Steuereinheit handelt, die, ausgehend von der Ausgangsgröße der Steuereinheit 100, eine weitere Ausgangsgröße oder eine Stellgröße berechnet.

Anstelle des zweiten Sensors 130 kann auch eine Berechnungseinheit treten, die die zweite Größe, ausgehend von anderen Betriebskenngrößen oder Steuergrößen, berechnet und/oder simuliert.

Das erste Kennfeld und das zweite Kennfeld kann alternativ zu einem Kennfeld auch als Berechnungseinheit ausgebildet sein.

Ausgehend von ersten Größen G1, die von einer ersten Funktionseinheit bereitgestellt werden, berechnet ein erstes Kennfeld 140 und ein zweites Kennfeld 150 erste und zweite Steuergrößen. Bevorzugt sind in dem ersten Kennfeld die erste Steuergröße S1 für den Betrieb der Brennkraftmaschine mit herkömmlichen Kraftstoffen abgelegt. In dem zweiten Kennfeld 150 ist die zweite Steuergröße S2 für den Betrieb der Brennkraftmaschine mit alternativen Kraftstoffen abgelegt. Diese beiden Steuergrößen werden dem Umschaltmittel 160 zugeleitet, das abhängig vom Ausgangssignal des Sensors 130, der ein Signal erfasst, das die Konzentration von Biodiesel charakterisiert, die erste und/oder die zweite Steuergröße auswählt, das heißt erkennt der Sensor 130, dass der Brennkraftmaschine ein alternativer Kraftstoff zugeführt wird, so wählt es die zweite Steuergröße S2 aus. Erkennt der Sensor, dass herkömmlicher Kraftstoff verwendet wird, so wählt er die erste Steuergröße S1 aus. Bei dieser Ausführungsform ist das Umschaltmittel 160 als Schaltmittel ausgebildet, das wahlweise die erste oder die zweite Steuergröße auswählt.

Bei einer bevorzugten Ausgestaltung ist vorgesehen, dass abhängig von der Konzentration zwischen der ersten Steuergröße und der zweiten Steuergröße interpoliert wird. Das heißt beispielsweise, erkennt der Sensor eine Konzentration von 50%, so wird der Mittelwert aus der ersten und der zweiten Steuergröße als Ausgangsgröße verwendet. Bevorzugt erfolgt eine lineare Interpolation. Das bedeutet, der Anteil von alternativem Kraftstoff im Kraftstoff entspricht dem Anteil der zweiten Steuergröße bei der Bildung der Ausgangsgröße. Mit der so gebildeten Ausgangsgröße wird dann die zweite Funktionseinheit beaufschlagt.

Bei einer alternativen Ausgestaltung kann auch vorgesehen sein, dass mehrere Kennfelder vorgesehen sind, in denen abhängig von der Konzentration unterschiedliche Steuergrößen abgelegt sind. Zwischen diesen kann widerum interpoliert werden um den gesamten Konzentrationsbereich abzudecken.

Eine zweite Ausgestaltung ist in Figur 2 dargestellt. Entsprechende Elemente sind mit entsprechenden Bezugszeichen bezeichnet. Diese Ausführungsform unterscheidet sich wesentlich von der ersten Ausführungsform darin, dass lediglich ein Kennfeld für den Betrieb mit herkömmlichem Kraftstoff vorgesehen ist. Desweiteren ist ein zweites Kennfeld vorgesehen, in dem ein Korrekturwert K abhängig von der zweiten Größe abgelegt wird, der angibt, um welchen Wert die erste Steuergröße, abhängig von der Konzentration von alternativen Kraftstoffen, zu korrigieren ist. Um diesen Wert wird dann in der Korrektureinrichtung 190 das Ausgangssignal des ersten Kennfeldes multiplikativ und/oder additiv korrigiert und so die Ausgangsgröße berechnet.

Bei einer besonders vorteilhaften Ausführungsform wird erfindungsgemäß berücksichtigt, dass alternative Kraftstoffe einen anderen Brennwert besitzen als herkömmliche Kraftstoffe. Insbesondere besitzt sogenannter Biodiesel einen niedrigeren Brennwert als herkömmliche Kraftstoffe. Erfindungsgemäß ist deshalb vorgesehen, dass der Gehalt an Biodiesel im Kraftstoff gemessen und bei der Steuerung der Brennkraftmaschine geeignete Maßnahmen ergriffen werden, um den unterschiedlichen Brennwert zu kompensieren.

Solche Maßnahmen sind insbesondere die Anpassung des Brennwerts bei der Konvertierung der Drehmomentenanforderung des Fahrers in eine Mengenanforderung. Hierbei entspricht die erste Größe G1 der Figur 1 beziehungsweise der Figur 2 der Drehmomentenanforderung und die Ausgangsgröße A einer Mengenanforderung, das heißt die erste Größe charakterisiert das Drehmoment, das vom Fahrer gewünscht wird. Die Ausgangsgröße entspricht der hierzu erforderlichen Kraftstoffmenge, insbesondere der hierzu erforderlichen Kraftstoffmenge pro Hub der Einspritzung.

Als erste Größe wird vorzugsweise das Ausgangssignal eines Fahrpedalstellungsgebers verwendet. Bei der Ausgangsgröße A handelt es sich hierbei um eine interne Größe, die insbesondere die einzuspritzende Kraftstoffmenge charakterisiert und die von einer weiteren Steuereinheit 120 in Ansteuersignale umgerechnet werden.

Weiterhin ist vorgesehen, dass die Kraftstoffdichte bei der Konvertierung der Mengenanforderung in ein Einspritzvolumen berücksichtigt wird. Das heißt die erste Größe entspricht dem Mengenwunsch und die Ausgangsgröße entspricht einem Einspritzvolumen.

Besonders vorteilhaft ist es, wenn ergänzend oder alternativ zu den obigen Vorgehensweisen die mit Kraftstoffzumessung variable Parameter, wie beispielsweise der Einspritzdruck, die Ansteuerzeit der Injektoren in entsprechender Weise in in Abhängigkeit von der zweiten Größe vorgebbar sind.

Dadurch, dass bei Biodiesel Steuergrößen S2 verwendet werden, die gegenüber den Steuergrößen S1, die bei herkömmlichem Kraftstoff verwendet werden, zu größeren eingespritzten Kraftstoffmengen führen, ist mit dieser Vorgehensweise ist eine sehr genaue Anpassung der unterschiedlichen Brennwerte der unterschiedlichen Kraftstoffe möglich.

Üblicherweise werden bei Dieselbrennkraftmaschinen Glühstiftkerzen nach Anspringen des Motors noch für eine gewisse Nachglühzeit betrieben, um den Brennraum zu konditionieren. Diese Zeit wird üblicherweise abhängig von ersten Größen, die beispielsweise den Temperaturzustand der Brennkraftmaschine charakterisieren, vorgegeben.

Erfindungsgemäß ist nun vorgesehen, dass die Nachglühzeit der Glühstiftkerzen abhängig von der Konzentration der alternativen Kraftstoffe im Kraftstoff vorgegeben wird. Vorzugsweise wird die Nachglühzeit abhängig von der Konzentration verlängert. Dies bedeutet, je höher die Konzentration an alternativen Kraftstoffen ist, um so mehr wird die Nachglühzeit verlängert. Dies bedeutet, bei der Ausführungsform gemäß Figur 2 ist in dem Kennfeld 180 abhängig von der Konzentration ein Korrekturwert K zur Korrektur der Nachglühzeit, die in dem Kennfeld 150 abgelegt ist, abgespeichert. In dem Korrekturmittel 190 wird dann die, ausgehend von der im ersten Kennfeld 140 vorgegebene Nachglühzeit, um den in dem zweiten Kennfeld 180 Korrekturwert K verlängert. Dabei kann eine additive und/oder eine multiplikative Korrektur vorgesehen sein. Dies bedeutet, bei dem Stellelement 120 handelt es sich hier um die Glühkerzen und bei der ersten Funktionseinheit 110 um Sensoren, die den Betriebszustand, insbesondere den Temperaturzustand der Brennkraftmaschine, erfassen. Bei der Steuereinheit 100 handelt es sich dann um eine Steuereinheit, die den Glühvorgang steuert beziehungsweise Ansteuerzeiten für den Glühvorgang vorgibt.

Insbesondere bei sogenanntem Biodiesel können bei ansonsten gleichen Bedingungen erhöhte Emissionen von Stickoxiden auftreten, während gleichzeitig die Bildung von Partikeln zurückgeht. Erfindungsgemäß ist deshalb vorgesehen, dass abhängig von der zweiten Größe, die Abgasrückführregelung derart beeinflusst wird, dass die Stickoxidemissionen verringert werden. In dem ersten Kennfeld ist ein Steuersignal für die Abgasrückführung, abhängig von den üblichen Betriebsbedingungen, für eine übliche Brennkraftmaschine mit normalem Diesel abgelegt. In dem zweiten Kennfeld ist das entsprechende Signal, abhängig von denselben und/oder anderen Betriebskenngrößen für den Betrieb der Brennkraftmaschine mit Biodiesel, abgelegt. Vorzugsweise ist vorgesehen, dass bei ansonsten gleichen Bedingungen bei Verwendung von Biodiesel eine größere Abgasmenge rückgeführt wird.

Abhängig von der Konzentration des Biodiesels im herkömmlichen Kraftstoff wählt das Umschaltmittel 160 die erste oder die zweite Steuergröße aus, beziehungsweise berechnet diesen beiden Steuergrößen, mittels einer Interpolation. Dabei kann vorgesehen, dass direkt die Stellgröße, also das Abgasrückführstellelement beeinflusst wird oder eine Zwischengröße der Berechnung der Stellgröße. Das heißt, es wird entweder der Sollwert, ein Steuerwert oder eine andere Zwischengröße, abhängig von der Konzentration von Biodiesel, vorgegeben.

Zur Verminderungen der Stickoxidemissionen können auch ergänzend und/oder alternativ weitere Größen in Abhängigkeit der Biodieselkonzentration vorgegeben sein. So kann zum einen bei größeren Konzentrationen der Einspritzbeginn in Richtung spät verstellt werden. Das heißt als Ausgangsgröße wird ein Signal verwendet, das den Einspritzbeginn charakterisiert. So kann insbesondere der Sollwert einer Einspritzbeginnregelung eingesetzt werden. Desweiteren kann vorgesehen sein, dass als Ausgangsgröße der Kraftstoffdruck und insbesondere bei einem Common-Rail-System der Raildruck verändert wird, das heißt, es sind unterschiedliche Kennfelder für den Raildruck, abhängig von der Konzentration des Biodiesels, vorgesehen. Insbesondere ist eine Absenkung des Raildrucks bei steigender Konzentration vorteilhaft. Eine Absenkung des Einspritzdrucks hat eine Verlängerung der Einspritzdauer zur Folge, um eine konstante Kraftstoffmenge erzielen zu können.

Desweiteren kann vorgesehen sein, dass bei Systemen mit Nadelhubsteuerung der Nadelhub abhängig von der Biodieselkonzentration vorgebbar ist. Insbesondere ist eine Verringerung des Nadelhubs bei steigender Konzentration von Biodiesel vorteilhaft.

Um das Anspringverhalten beziehungsweise die erhöhten Schadstoff- und Lärmemissionen während des Kaltstarts zu minimieren ist erfindungsgemäß vorgesehen, dass die Steuerdaten, die die Voreinspritzung beeinflussen, abhängig von dem Signal, das die Konzentration von Biodiesel charakterisiert, entsprechend korrigiert beziehungsweise aus einem zweiten Kennfeld ausgelesen werden. Als Steuergrößen, die entsprechend beeinflusst werden, sind insbesondere die Voreinspritzmenge, der Beginn der Voreinspritzung, der Nadelhub bei der Voreinspritzung, der Abstand zwischen Vorund Haupteinspritzung und/oder die Zu- oder Abschaltung einer Voreinspritzung, insbesondere bei Einspritzsystemen die für zwei oder mehrere Voreinspritzungen geeignet sind.

Dies bedeutete, dass in dem ersten Kennfeld 140 ein Signal abgelegt ist, das die Voreinspritzmenge charakterisiert. Dies kann zum einen die Voreinspritzmenge, aber auch die Dauer der Voreinspritzung sein. Insbesondere ist vorgesehen, dass bei einer erhöhten Konzentration von Biodiesel die Voreinspritzmenge erhöht wird. Desweiteren ist vorgesehen, dass in dem Kennfeld ein Signal abgelegt ist, das den Spritzbeginn der Voreinspritzung charakterisiert. Desweiteren kann vorgesehen sein, dass der Nadelhub bei der Voreinspritzung abgelegt ist. Besonders vorteilhaft ist es, wenn in dem Kennfeld 140 der Abstand zwischen Vor- und Haupteinspritzung abgelegt ist.

Üblicherweise sind bei Dieselbrennkraftmaschinen Massnahmen vorgesehen, die verhindern, der Kraftstofffilter bei tiefen Kraftstofftemperaturen durch Ausscheidung fester Bestandteile bzw. durch Unterschreiten des Schmelzpunktes verstopft. Es wurde erkannt, dass Biodiesel eine höhere Viskosität als konventionelle Kraftstoffe. Ferner scheiden sich die festen Bestandteile bereits bei höheren Temperaturen ab. Ferner beobachtet man bei Biodiesel eine höhere Tendenz zur Bildung von festen Bestandteilen durch mikrobiologische Aktivität.

Erfindungsgemäß vorgesehen, das abhängig vom Gehalt an Biodiesel unterschiedliche Massnahmen ergriffen werden. So vorgesehen, dass die Solltemperatur für eine Filterheizung bei erkanntem Biodiesel erhöht wird. Bei der zweiten Funktionseinheit handelt es sich um eine Steuereinheit für eine Filterheizung. Bei der Ausgangsgröße A handelt es sich um den Sollwert für die Temperatur des Kraftstoffes bzw. des Filters. Alternativ können auch andere Größen, die die Filterheizung beeinflussen als Ausgangsgrößen A verwendet werden.

Besonders vorteilhaft ist es, wenn Speichereffekte berücksichtigt werden. Dies bedeutet beispielsweise, dass bei abnehmender Konzentration von Biodiesel für eine bestimmte Zeitdauer weiter die Ausgangsgröße A oder die Steuergröße für die höhere Konzentration verwendet werden.

So wird beispielsweise während und nach dem Betrieb mit RME die Filtertemperatur angehoben. Die Anhebung nach dem Betrieb mit Biodiesel erfolgt, da der Bioschlamm im Filter nicht oder nicht sofort abgebaut wird. Dadurch wird der Verstopfungsgefahr im Kaltstart entgegengewirkt.

Bei verschiedenen Common-Rail-Systemen, insbesondere solchen mit einer gesteuerten Hochdruckpumpe und einem Druckregelventil, ist es möglich, durch geeignete Steuer- bzw. Regelstrategien die Durchflußmenge durch das Druckregelventil bei niederen Temperaturen zu erhöhen. Dies hat zur Folge, dass mehr Druckarbeit in Wärme umgewandelt wird, was wiederum zur gezielten Erwärmung des Kraftstoffes genutzt werden kann.

Erfindungsgemäß ist vorgesehen, dass die Durchflußmenge bei Verwendung von Biodiesel erhöht wird. Dies kann beispielsweise dadurch realisiert sein, dass als Ausgangsgröße die Durchflußmenge erfindungsgemäß vorgebbar ist.

Erfindungsgemäß ist vorgesehen, dass verschiedene Kennfelder, in denen, abhängig von einer ersten Größe, eine Steuergröße abgelegt ist, durch die die in Figur 1 beziehungsweise Figur 2 dargestellte Steuereinheit ersetzt wird, wobei zusätzlich ein Sensor und/oder eine Berechnungseinheit vorgesehen sind, die ein Signal bereitstellen beziehungsweise erfassen, das die Konzentration von Biodiesel charakterisiert. Das heißt, ein entsprechendes Kennfeld für eine Steuergröße wird durch zwei Kennfelder und ein entsprechendes Umschaltmittel ersetzt. Alternativ kann auch vorgesehen sein, dass ein Kennfeldwert mit Hilfe eines Korrekturwertes multiplikativ oder additiv, abhängig von der Konzentration von Biodiesel, korrigierbar ist.

Dies bedeutet, die entsprechende Steuereinheit 100 ersetzt die entsprechenden Kennfelder für die entsprechenden Steuergrößen. Alternativ oder ergänzend kann auch vorgesehen sein, dass nicht Kennfelder sondern Berechnungseinheiten entsprechend ersetzt werden.

Bei den beschriebenen Signalen handelt es sich um eine bevorzugte Auswahl, wobei die Signale einzeln oder auch in Kombination miteinander entsprechend korrigierbar sind. Desweiteren können auch weitere Signale, die nicht dargestellt sind, in entsprechender Weise beeinflusst werden.

## Patentansprüche

1. Verfahren zur Steuerung einer Brennkraftmaschine, wobei ausgehend von wenigstens einer ersten Größe gemäß einer ersten Abhängigkeit eine erste Steuergröße, vorgegeben ist, dass ausgehend von wenigstens der ersten Größe gemäß einer zweiten Abhängigkeit eine zweite Steuergröße vorgegeben ist, dass abhängig von einer zweiten Größe, ausgehend von der ersten und/oder der zweiten Steuergröße, eine Ausgangsgröße vorgegeben ist wobei die Steuergrößen zur Steuerung und/oder Regelung einer Einspritzung von Kraftstoff, einer Rückführung von Abgas, eines Kraftstoffdrucks, einer Filterheizung und/oder eines Glühvorgangs verwendet werden, **dadurch gekennzeichnet, dass** die erste Steuergröße der Ausgangsgröße bei Verwendung von herkömmlichen Kraftstoff und die zweite Steuergröße der Ausgangsgröße bei Verwendung von Biodiesel entspricht, und dass die zweite Größe die Konzentration von Biodiesel im Kraftstoff charakterisiert.

2. Verfahren nach Anspruch 1, **dadurch gekennzeichnet, dass** die zweite Größe mittels eines Sensors erfasst wird.

3. Verfahren nach einem der vorherigen Ansprüche, **dadurch gekennzeichnet, dass** es sich bei der Ausgangsgröße um ein Signal handelt, das zur Ansteuerung eines Stellelement verwendet wird oder dass ausgehend von der Ausgangsgröße ein Signal zur Ansteuerung eines Stellelements vorgebbar ist.

4. Verfahren nach Anspruch 3, **dadurch gekennzeichnet, dass** das Stellelement die Einspritzung von Kraftstoff, den Anteil an rückgeführtem Abgas, die Regelung des Kraftstoffdrucks, eine Filterheizung und/oder einen Glühvorgang beeinflusst.

5. Vorrichtung zur Steuerung einer Brennkraftmaschine, mit ersten Mitteln, die ausgehend von wenigstens einer ersten Größe gemäß einer ersten Abhängigkeit eine erste Steuergröße vorgeben, mit zweiten Mitteln, die ausgehend von wenigstens der ersten Größe gemäß einer zweiten Abhängigkeit eine zweite Steuergröße vorgeben, mit dritten Mitteln, die abhängig von der zweiten Größe, ausgehend von der ersten und/oder der zweiten Steuergröße, eine Ausgangsgröße vorgeben, wobei die Steuergrößen zur Steuerung und/oder Regelung einer Einspritzung von Kraftstoff, einer Rückführung von Abgas, eines Kraftstoffdrucks, einer Filterheizung und/oder eines Glühvorgangs verwendet werden, **dadurch gekennzeichnet, dass** die erste Steuergröße der Ausgangsgröße bei Verwendung von herkömmlichen Kraftstoff und die zweite Steuergröße der Ausgangsgröße bei Verwendung von Biodiesel entspricht, und dass die zweite Größe die Konzentration von Biodiesel im Kraftstoff charakterisiert.

## Claims

1. Method for controlling an internal combustion engine, with a first control variable being predefined on the basis of at least one first variable according to a first dependency, with a second control variable being predefined on the basis of at least the first variable according to a second dependency, with an output variable being predefined on the basis of the first and/or the second control variable as a function of a second variable, with the control variables being used for controlling and/or regulating an injection of fuel, a recirculation of exhaust gas, a fuel pressure, a filter heater and/or a preheating process, **characterized in that** the first control variable corresponds to the output variable when using conventional fuel and the second control variable corresponds to the output variable when using biodiesel, and **in that** the second variable characterizes the concentration of biodiesel in the fuel.

2. Method according to Claim 1, **characterized in that** the second variable is measured by means of a sensor.

3. Method according to one of the preceding claims, **characterized in that** the output variable is a signal which is used for activating an actuating element, or **in that** a signal for activating an actuating element can be predefined on the basis of the output variable.

4. Method according to Claim 3, **characterized in that** the actuating element influences the injection of fuel, the proportion of recirculated exhaust gas, the regulation of the fuel pressure, a filter heater and/or a preheating process.

5. Device for controlling an internal combustion engine, having first means which predefine a first control variable on the basis of at least one first variable according to a first dependency, having second means which predefine a second control variable on the basis of at least the first variable according to a second dependency, having third means which predefine an output variable on the basis of the first and/or the second control variable as a function of the second variable, with the control variables being used for controlling and/or regulating an injection of fuel, a recirculation of exhaust gas, a fuel pressure, a filter heater and/or a preheating process, **characterized in that** the first control variable corresponds to the output variable when using conventional fuel and the second control variable corresponds to the output variable when using biodiesel, and **in that** the second variable characterizes the concentration of biodiesel in the fuel.

## Revendications

1. Procédé de commande d'un moteur à combustion interne, dans lequel, à partir d'au moins une première grandeur conformément à une première relation, une première grandeur de commande est prédéfinie, à partir d'au moins la première grandeur conformément à une deuxième relation, une deuxième grandeur de commande est prédéfinie, en fonction d'une deuxième grandeur, à partir de la première et/ou de la deuxième grandeur de commande, une grandeur de départ est prédéfinie, les grandeurs de commande étant utilisées pour la commande et/ou la régulation d'une injection de carburant, d'une recirculation de gaz d'échappement, d'une pression de carburant, d'un chauffage de filtre et/ou d'une opération de préchauffage, **caractérisé en ce que** la première grandeur de commande correspond à la grandeur de départ lors de l'utilisation de carburant usuel et la deuxième grandeur de commande correspond à la grandeur de départ lors de l'utilisation de biodiesel, et **en ce que** la deuxième grandeur caractérise la concentration de biodiesel dans le carburant.

2. Procédé selon la revendication 1, **caractérisé en ce que** la deuxième grandeur est détectée au moyen d'un capteur.

3. Procédé selon l'une quelconque des revendications précédentes, **caractérisé en ce que** la grandeur de départ est un signal qui est utilisé pour commander un élément de réglage ou **en ce qu'**un signal pour commander un élément de réglage peut être prédéfini à partir de la grandeur de départ.

4. Procédé selon la revendication 3, **caractérisé en ce que** l'élément de réglage influence l'injection de carburant, la proportion de gaz d'échappement recirculé, la régulation de la pression de carburant, un chauffage de filtre et/ou une opération de préchauffage.

5. Dispositif de commande d'un moteur à combustion interne, comprenant des premiers moyens, qui, à partir d'au moins une première grandeur conformément à une première relation, prédéfinissent une première grandeur de commande, des deuxièmes moyens, qui, à partir d'au moins la première grandeur conformément à une deuxième relation, prédéfinissent une deuxième grandeur de commande, des troisièmes moyens, qui, en fonction de la deuxième grandeur, à partir de la première et/ou de la deuxième grandeur de commande, prédéfinissent une grandeur de départ, les grandeurs de commande étant utilisées pour la commande et/ou la régulation d'une injection de carburant, d'une recirculation de gaz d'échappement, d'une pression de carburant, d'un chauffage de filtre et/ou d'une opération de préchauffage, **caractérisé en ce que** la première grandeur de commande correspond à la grandeur de départ lors de l'utilisation de carburant usuel et la deuxième grandeur de commande correspond à la grandeur de départ lors de l'utilisation de biodiesel, et **en ce que** la deuxième grandeur caractérise la concentration de biodiesel dans le carburant.
